**Europäisches Patentamt**

**European Patent Office**

**Office européen des brevets**

(19)

(11) Publication number: **0 000 077**
**A1**

(12)

# EUROPEAN PATENT APPLICATION

(21) Application number: **78200015.2**

(22) Date of filing: **01.06.78**

(51) Int. Cl.²: **A 23 L 2/38**

(30) Priority: **03.06.77 US 803337**

(43) Date of publication of application:
**20.12.78 Bulletin 78/1**

(84) Designated Contracting States:
**BE CH DE FR GB LU NL SE**

(71) Applicant: **THE PROCTER & GAMBLE COMPANY,**
**301 East Sixth Street,**
**Cincinnati, Ohio (US)**

(72) Inventor: **McCarty, Charles Bruce,**
**2921 WerkRoad,**
**Cincinnati, OH (US)**

(72) Inventor: **Sampson, Ronald Lee,**
**1580 Tremont Lane,**
**Cincinnati, OH 45224 (US)**

(74) Representative: **Munro, Hamish David et al,**
**PROCTER & GAMBLE EUROPEAN TECHNICAL CENTER**
**Temselaan 100,**
**1820 - Strombeek-Bever (BE)**

(54) **Dry-carbonated beverage mixes and method for the preparation of beverages therewith.**

(57) A substantially dry fructose-seetened dietetic, carbonated beverage mix comprising a crystalline fructose sweetener, a flavorant, an acidulant and an amount effective to carbonate a beverage of carbon dioxide-loaded zeolitic molecular sieve material. At the point of consumption, when a beverage-making liquid is brought into contact with the mix, a fructose-sweetened, dietetic, carbonated beverage is provided. The instant dry beverage mix of the present invention provides a higher level of sweetness in a dietetic carbonated beverage than other liquid beverage systems sweetened with predissolved fructose or other natural sugars whether solid or liquid on a calorie-for-calorie basis. The dry instant beverage mix herein provides a faster rate of carbonation of the beverage prepared therefrom than is provided by similar instant dry beverage mixed in which sucrose is the primary sweetener.

**TITLE MODIFIED**
see front page

DRY CARBONATED BEVERAGE MIXES

This invention relates to a dry carbonated beverage mix for dietetic carbonated beverages. More particularly, it relates to naturally sweetened dry beverage mixes which are free of artificial sweeteners.

The preparation of potable beverages, particularly carbonated beverages, by dissolution of a natural or an artificially sweetened dry beverage mix in water has been described in the art. Depending upon the nature of the various compositions included in such mixes, beverages **prepared therefrom**

may be characterized by caloric content as dietetic or non-dietetic. The dietetic carbonated beverages prepared from such mixes have heretofore been made with artificial sweeteners. Artificial sweeteners appeared to be necessary in order to keep the calories down but provide effective sweetness. On the other hand, the non-dietetic carbonated beverages contain a high caloric content considered unattractive to the weight-conscious and forbidden or ill-advised for certain others. Numerous approaches have been taken in an attempt to provide a suitably sweetened low calorie soft drink. Most notably, certain artificial sweeteners have been widely accepted and utilized for this purpose. There are, however, a number of persons, e.g., the obese, who should not include excessive sugar in their diet but who do not want or like the artificially sweetened carbonated beverage.

Illustrative of a low-calorie carbonated beverage mix is the composition of Timothy J. Kennedy and Philip J. Shires (U.S. Patent Application 570,332, filed April 21, 1975). Kennedy et al. disclose a dry low-calorie carbonated beverage mix comprising from 7-30% of a crystalline sugar carrier. However, the Kennedy et al. low-calorie dry mix is primarily sweetened with a non-sugar dipeptide sweetening agent, e.g., aspartame.

Fructose is disclosed, among a number of suitable sugars, as a suitable sweetener in a dry-mix system in combination with molecular sieves in U.S. Patent 3,930,053 to C. H. Japikse, G. Singh and T. J. Kennedy, December 30, 1975. Japikse et al. do not, however, mention or discuss dietetic beverages or that a suitably sweetened, low-calorie beverage could be made from an all-fructose-sweetened dry mix.

For maximum convenience in use of the carbonation devices herein, it is desirable that the rate of carbonation of the beverage made therewith be rapid. Japikse et al do not mention any effect which fructose may have, for better or worse, on the rate of carbonation of the beverage made with a dry beverage mix according to their invention and a $CO_2$-loaded molecular sieve carbonation device.

Although fructose is the sweetest natural sugar, a liquid fructose-sweetened dietetic carbonated beverage is hampered by insufficient sweetness at dietetic levels, for the sweetest form of fructose is unstable in liquid systems and diminishes with the passage of time.

OBJECTS OF THE INVENTION

It has been found that fructose can provide effective sweetness for a dietetic carbonated beverage via the dry carbonated beverage mix and method of the present invention, in contrast to the diminished or fleeting fructose sweetness developed in liquid systems, particularly liquid carbonated soft drinks. It is a primary object of the present invention to provide an alternative to artificially sweetened dietetic carbonated beverages.

It is, therefore, an object of the present invention to provide a fructose-sweetened, dry beverage mix in combination with a suitable carbonation device for the provision of a sweet dietetic carbonated beverage.

It is also an object of the present invention to provide a method for the use of fructose in dietetic beverages which overcome certain problems of the prior art.

In connection with the latter object, it is a particular object of the present invention to overcome much of the loss of fructose sweetness in a liquid beverage system.

It is another object of the present invention to provide a method which maximizes the sweetening power of fructose in a particular dietetic beverage system.

It is a further object of the present invention to provide a dry beverage mix in combination with a suitable carbonation device whereby the rate of carbonation of the final beverage is increased or maximized.

It is another object of the present invention to provide a method which maximizes the sweetening power of fructose in a particular dietetic carbonated beverage system.

## SUMMARY OF THE INVENTION

The present invention is based on the discovery that a surprisingly sweet, low-calorie, dietetic, rapidly carbonating carbonated beverage is provided by a method of adding a beverage-making liquid to an instant, dry, low-calorie, dietetic, fructose-sweetened carbonated beverage mix, at the point of consumption. The dry instant mix of the present invention comprises an effective amount of an essentially pure crystalline fructose sweetener, a flavorant and an aciculant, in combination with an instant carbonation device. The carbonation device is effective to carbonate the beverage at the point of consumption when said instant mix is brought into contact with a beverage-making liquid. A $CO_2$-loaded molecular sieve disc affixed in a serving container is a preferred instant carbonation device.

It is found that the use of essentially pure crystalline fructose as the sweetener in the dry beverage mix herein provides a mix which, when carbonated with a $CO_2$-loaded molecular sieve carbonation device yields a beverage which carbonates more rapidly at the point of consumption than does a carbonated beverage sweetened with sucrose and carbonated with a $CO_2$-loaded molecular sieve carbonation device.

A beverage made in accordance with the present invention has only about 6 calories per fluid ounce of serving, but surprisingly has an effective level of sweetness for consumer enjoyment during average serving periods. In other words, the beverage of the present invention is acceptably sweet, but contains only about one-half the sugar weight and caloric content of non-dietetic beverages.

## DESCRIPTION OF THE PREFERRED EMBODIMENTS

In accordance with the present invention, the dry, low-calorie, dietetic, rapidly carbonating carbonated beverage mix of the present invention is made from (1) an essentially pure crystalline fructose sweetener, (2) a flavorant, (3) an acidulant and (4) an instant carbonation device effective to carbonate a beverage when an effective amount of a beverage-making liquid is brought into contact with the dry mix. The dry mix and the beverage made therefrom are free of artificial sweeteners.

The dry mix is made by dry mixing an effective amount of essentially pure crystalline fructose with other dried beverage ingredients. The term "essentially pure crystalline fructose" as used herein includes fructose powders, granules, and agglomerated powders.

Preferably, the fructose sweetener is dry-mixed with dried flavor crystals comprising the flavorant, acidulant and a crystalline sugar carrier. Such flavor crystals are preferably made by the method comprising forming a uniform slurry (or a thick liquid) of a liquid flavorant, an acidulant, and a minor but effective amount of a crystalline sugar carrier. Sucrose is a preferred carrier, but at the concentration levels involved contributes no perceptible sweetness.

0000077

The uniform slurry is then dehydrated in a suitable manner, e.g., vacuum-dried to provide the substantially dry flavor crystals. Admixing an effective amount of the dry crystalline fructose sweetener with the flavor crystals gives a preferred, stable, dry beverage mix.

A preferred embodiment of the dry beverage mix comprises a dry mix of essentially pure dry crystalline fructose and dry flavor crystals in which the flavor crystals constitute from about 4% to about 12% by weight of the dry beverage mix. The crystalline sugar carrier of the flavor crystals is sucrose which constitutes from about 20% to 40% by weight of said dry flavor crystals. In other words, the fructose sweetener constitutes from about 88% to about 96% by weight of the dry beverage mix.

Another way to make the dry beverage mix of the present invention is to make a slurry of all the dry beverage mix ingredients including an effective amount of essentially pure crystalline fructose sweetener and co-drying the same to provide a substantially dry uniform beverage mix. Such a mix is a substantially uniform combination of said fructose sweetener, flavorant and acidulant. Of course, other methods of combining and drying the ingredients will be obvious to those skilled in the art.

Various beverage flavorants and acidulant systems useful in dry beverage mixes are well known in the art. Thus, a detailed discussion of these components is unnecessary to practice or understand the present invention..

BAD ORIGINAL

In a preferred embodiment, a $CO_2$-loaded molecular sieve disc is affixed at the bottom of a serving container to provide instant carbonation. Examples of suitable carbonation devices useful in the present invention are disclosed by Alexander Leon Liepa and Cornelis Hendrikus Japikse in U. S. Patent No. 4,007,134, February 8, 1977, herein incorporated by reference in its entirety, particularly the drawings.

A preferred instant carbonation device following the teachings of Liepa and Japikse is a single molded block of $CO_2$-loaded molecular sieve material having a thickness of from about 0.001 inch to about 3 inches. Both the block and dry beverage mix are enclosed or put into a container, e.g., a serving cup. When water is introduced, preferably over ice, into the container making contact with the mix and block, the $CO_2$ is discharged from the block and its discharge serves to agitate and promote the dissolution of the dry mix and provide beverage carbonation.

0000077

The fructose sweetened beverage mixes herein are found to carbonate more rapidly than otherwise similar beverages which are sweetened with sucrose when each is carbonated with a $CO_2$-loaded molecular sieve carbonation device as discussed herein. Furthermore, it is found that the rate of carbonation of the beverage made with the essentially pure crystalline fructose sweetened beverage mix herein does not depend on whether the carbonation device is placed above or below the dry mix particles in the serving container before the addition of the beverage making liquid and the preferably added ice. This facilitates the use of carbonation devices which are not affixed to the serving container, since the consumer will not find the effectiveness of the carbonation device affected by whether the device or dry beverage mix particles are first placed in the serving container.

The present invention provides a method of maximizing the sweetness level of fructose in a fructose-sweetened, low calorie, dietetic, rapidly carbonating carbonated beverage at the point of consumption.

By adding a beverage-making liquid to the instant dry, low calorie, dietetic, rapidly carbonating carbonated beverage mix a surprisingly high level of fructose sweetness is provided. The term "dietetic" beverage as used herein means a beverage which has 6 or less calories per fluid ounce of serving. Of course, the fructose sweetener accounts for substantially all of the calories in the beverage.

No artificial sweetener is needed or used, but yet the resulting beverage is surprisingly sweet for substantially all consumers to enjoy. For an average serving period of about 3 to about 27 minutes for a 6- to 14-ounce serving, a dietetic beverage made by the instant method is effectively sweetened.

In another preferred embodiment comprising a carbonation device illustrated by FIG.3 of U.S. Patent No. 4,007,134, supra , a molded block in the form of a disc having a plurality of elongated channels extending from one surface to an opposite surface is held in place at the bottom of a serving cup. The disc is a $CO_2$-loaded molecular sieve material having an amount of carbon dioxide effective to carbonate the beverage when brought in contact with the liquid. Chilled water or cool tap water and ice are preferred beverage-making liquids. Carbonated water can also be used as both the carbonation device and the beverage-making liquid.

For best results, ice and water are added to the serving cup containing the dry carbonated beverage mix to provide a specified total volume.

An anti-foaming agent can be included in the dry beverage mix. A rapidly dissolvable dry antifoam additive for dry beverage compositions is disclosed in U.S. Patent 3,983,251 to Gyanendra Singh, September 28, 1976, assigned to The Procter & Gamble Company. The antifoamant can be an integral part of the flavor crystals of the dry beverage mix.

The products and methods of this invention are further illustrated but not limited to the following Examples

## EXAMPLE I

### Flavor Crystals Preparation

A 200 g batch of flavor crystals, which when used constitute about 6.7 parts by dry weight (93.3 parts fructose sweetener) of a low-calorie dry beverage mix, was prepared as follows:

| Ingredients | % (dry basis) |
|---|---|
| Powdered sugar (sucrose) | 29.50 |
| Cola Base plus acidulant | 54.10 |
| Monosodium phosphate | 15.61 |
| Monoammonium glycyrrhizinate | 0.45 |
| Polyethylene oxide | 0.07 |
| Methyl silicone | 0.27 |
| | 100.00 |

All of the liquid ingredients were weighed into a single container.

All the dry ingredients were weighed separately, then slowly added to the liquid ingredients while blending until a uniform slurry mixture was obtained. Present in the formulation, at a level of about 15 ppm in a 10.6 fluid ounce drink, is monoammonium glycyrrhizinate, a natural GRAS sweet flavor enhancer derived from the licorice plant. The thick liquid slurry product was poured into stainless steel trays and vacuum-dried at a temperature of about 100°F for approximately 20 hours. The dried flavor crystals were screened through a U.S.#12 screen, and the acceptable flavor crystals were retained on a U.S. #20 screen.

## EXAMPLE II

Several sample servings of a dry, low-calorie, dietetic carbonated beverage mix were prepared by dry admixing 93.3 parts of substantially dry and essentially pure crystalline fructose with 6.7 parts of the dry flavor crystals of Example I. This is about 15.9 g of fructose and about 1.15 g of flavor crystals for a total weight of 17.05 g of dry beverage mix per 10.6 fluid ounce drink, including 105 g of cubed ice (3.55 fluid ounce). The dry mix was placed in a serving cup equipped with a $CO_2$-loaded, molecular sieve disc like the one illustrated in Fig. 3 of U.S. Patent 4,007,134, supra. At the point of consumption, the ice is placed in the cup and cool tap water added. The beverage is rapidly carbonated.

### T A B L E   I

| Samples | A | B |
|---|---|---|
| Flavor crystals | 1.15 g/serving | 1.15 g/serving |
| Crystalline fructose | 15.9 g/serving | 15.9 g/serving |
| Carbonated beverage preparation method | Freshly dis-solved dry mix | Dissolved 1 day before carbonation |

| Expert Flavor Panelist | Sweetness Scale 10-90 | |
|---|---|---|
| | A | B |
| 1 | 50 | 40 |
| 2 | 50 | 30 |
| 3 | 50 | 30 |
| 4 | 50 | 30 |
| 5 | 70 | 40 |
| 6 | 50 | 40 |
| Average | 51.7 | 35.0 |

A panel of expert tasters in a blind test tasted two beverages. The panelist rated the sweetness of each beverage on a sweetness scale of 10 to 90. One of the beverages, shown in Table I under column A, was made from the dry low-calorie beverage mix of Example II. The other beverage shown under column B was prepared by dissolving the same dry beverage mix of Example II in 200 ml of cool tap water a day before. When served, the one-day-old solution was poured into a serving cup containing 105 g of cubed ice and a $CO_2$-loaded disc for a 10.6 fluid ounce serving.

The beverage under column A was freshly prepared from the dry mix by adding about 105 g of cubed ice and 200 ml of cool tap water thereto. The beverage is rapidly carbonated.

The beverages, each having a caloric content of about 6.0 per fluid ounce of serving, were allowed to stand for about 4 minutes before tasting. After about 4 minutes, the level of carbonation in both beverages was about 1.5 to about 1.6 volumes of $CO_2$ per volume of liquid.

The sweetness level of the beverage under column A was found by all panelists to be greater than that of the beverage under column B.

On a sweetness scale of 10-90 as used in Table I, ratings approaching 10 are the least sweet, whereas ratings approaching 90 are the most sweet, with both extremes being unacceptable with the optimum level of sweetness being about 50. It will be noted from Table I that the average panelist rated the sweetness of Beverage A near the optimum mid-point of the rating scale.

## EXAMPLE III

A 2000 g batch of a dry low-calorie dietetic carbonated cola beverage mix was prepared having the following formulation:

| Ingredients | Parts (dry weight) |
|---|---|
| Fructose | 95.02 |
| Flavorant + acidulant (Cola flavor base including the acidulant.....................3.85 Monosodium phosphate........1.10 Monoammonium glycyrrhizi- nate.....0.09 | 5.04 |
| | 100.06 |

The dry mix was prepared by weighing and mixing the dry ingredients together first and then combining the admixture with the liquid cola flavor base and acidulant. This admixture resulted in a uniform liquid slurry. The slurry was then mixed with the fructose in a Hobart blender until a uniform wet flavor-coated fructose mass resulted. This wet mass was transferred to trays and vacuum-dried at a drying shelf temperature between room temperature and 100°F. The dried product was passed through a U.S. #6 screen and retained on a U.S. #18 Standard screen to provide a combination of the fructose sweetener coated with said flavorant and acidulant.

The dry beverage mix was packed into serving cups having a $CO_2$-loaded carbonation disc as described in U.S. Patent 4,007,134, Fig. 3, supra, at a level of 17.5 g; about 105 g of ice was added to make a 11.3 fluid ounce serving. When the water was introduced into the cup making contact with the disc and dry mix, the $CO_2$ discharged to agitate and promote the dissolution of the dry mix and provide beverage carbonation. The beverage was rapidly carbonated.

The beverage was allowed to stand for about 5 minutes; a panel of expert tasters tasted the fructose-sweetened dietetic carbonated beverage and found it acceptably sweet and without any unpleasant aftertaste.

WHAT IS CLAIMED IS:

c

'v

?

r

w

t

l

w

s

s

h

p

i

v

v

p

c

1. A dry, low-calorie carbonated beverage mix comprising a sweetener, a flavorant, an acidulant and an instant carbonation device effective to carbonate a beverage when said mix is brought into contact with a beverage-making liquid, characterised in that the beverage is free of artificial sweeteners and in that the sweetener comprises essentially pure fructose which provides substantially all of the calories.

2. A beverage mix according to Claim 1 characterised in that the instant carbonation device is a $CO_2$-loaded molecular sieve device.

3. A beverage mix according to Claim 1 or Claim 2 characterised in that the instant carbonation device is a single molded block having a thickness of from about 0.001 inch to about 3 inches; said block being affixed in said container, whereby when said beverage-making liquid is introduced in said container making contact with said mix and said block, said $CO_2$ is discharged to agitate and promote dissolution of said dry mix and provide beverage carbonation.

4. A beverage mix according to any one of Claims 1-3 characterised in that the beverage mix comprises dry flavor crystals comprising the flavorant, the acidulant, and a crystalline sugar carrier.

5. A beverage mix according to Claim 4 characterised in that the flavor crystals constitute from 4% to 12% by weight of the dry beverage mix, and in that the crystalline sugar carrier is sucrose which constitutes from about 20% to 50% by weight of the dry flavor crystals.

6. A method of making a sweet, flavored carbonated beverage comprising adding a beverage-making liquid to a sweetened dry beverage mix at the point of consumption, said beverage mix comprising a sweetener, a flavorant, an acidulant and an instant carbonation device effective to carbonate the beverage at the point of consumption when said beverage-making liquid is added to said beverage mix, characterised in that the sweetener comprises not less than 88% by weight of total sweetener of essentially
pure crystalline fructose whereby said sweet, flavored
carbonated beverage has a sweetness level greater than
the sweetness level of a carbonated beverage sweetened
with predissolved fructose on a calorie-for-calorie basis.

7. A method according to Claim 6 characterised in
that the instant carbonation device comprises a $CO_2$-
loaded molecular sieve device and in that the carbonated
beverage has a more rapid rate of carbonation at the
point of consumption than has a carbonated beverage
sweetened with sucrose and carbonated with the said
instant carbonation device.

8. A method according to Claim 6 or Claim 7
characterised in that the beverage mix comprises dry flavor
crystals comprising said acidulant and said flavorant
and a crystalline sugar carrier.

9. A method according to Claim 8, characterised in
that the crystalline sugar carrier is sucrose, in that
the carrier is from 20% to 50% by weight of the flavor
crystals, and in that the flavor crystals constitute from
4% to 12% by weight of said dry beverage mix.

European Patent
Office

**EUROPEAN SEARCH REPORT**

Application number

0000077

EP 78 20 0015

| Category | Citation of document with indication, where appropriate, of relevant passages | Relevant to claim |
|---|---|---|
| | **DOCUMENTS CONSIDERED TO BE RELEVANT** | |
| X | US - A - 3 888 998 (R.L.SAMPSON et al.)  * Column 10, lines 48-64; example 7; column 1, lines 8-20; column 13, lines 2-46; column 21, lines 49-68 * | 1-9 |
| X | US - A - 3 930 053 (C.H.JAPIKSE et al.)  * Claim 1; column 2, line 40; column 4, lines 5-15; column 6, lines 30-34 * | 1-9 |
| | FR - 2 144 939 (BERNET)  * Example 1 * | 1,6 |

**CLASSIFICATION OF THE APPLICATION (Int. Cl ²).**

A 23 L 2/38

**TECHNICAL FIELDS SEARCHED (Int.Cl.²)**

A 23 L 2/38
A 23 L 2/40
C 02 D 1/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 24-08-1978 | LEHERTE |